# EUROPEAN PATENT SPECIFICATION

(11) **EP 3 486 871 B1**
(45) Date of publication and mention of the grant of the patent: **05.05.2021**
(21) Application number: 17202090.1
(22) Date of filing: 16.11.2017
(51) Int. Cl.: G06T 7/80

(54) **A VISION SYSTEM AND METHOD FOR AUTONOMOUS DRIVING AND/OR DRIVER ASSISTANCE IN A MOTOR VEHICLE**
BILDSYSTEM UND VERFAHREN ZUM AUTONOMEN FAHREN UND/ODER ZUR FAHRERASSISTENZ IN EINEM KRAFTFAHRZEUG
SYSTÈME DE VISION ET PROCÉDÉ POUR ENTRAÎNEMENT AUTONOME ET/OU D'AIDE À LA CONDUITE DANS UN VÉHICULE À MOTEUR

(43) Date of publication of application: 22.05.2019
(73) Proprietor: Veoneer Sweden AB, 447 83 Vårgårda (SE)
(72) Inventor: MEDLEY, Fredrik, 582 16 Linköping (SE); ANKELHED, Daniel, 58337 Linköping (SE); SPIES, Hagen, 582 29 Linköping (SE)
(74) Representative: Müller Verweyen

(56) References cited:
- EP-A2- 2 181 417
- US-A1- 2015 312 564
- US-B2- 9 213 938
- Nn: "Rotation formalisms in three dimensions", Wikipedia, 15 August 2017 (2017-08-15), XP055463411, Retrieved from the Internet: URL:https://en.wikipedia.org/w/index.php?t itle=Rotation_formalisms_in_three_dimensio ns&oldid=795689876 [retrieved on 2018-03-28]
- Nn: "Calculating Forward Vector Given Rotation in 3D", Stackoverflow, 13 August 2017 (2017-08-13), XP055463405, Retrieved from the Internet: URL:https://stackoverflow.com/questions/45 664697/calculating-forward-vector-given-ro tation-in-3d [retrieved on 2018-03-28]
- Nn: "Interquartile range", Wikipedia, 19 September 2017 (2017-09-19), XP055463446, Retrieved from the Internet: URL:https://en.wikipedia.org/w/index.php?t itle=Interquartile_range&oldid=801326688#O utliers [retrieved on 2018-03-28]

## Description

The invention relates to a vision system for autonomous driving and/or driver assistance for a motor vehicle, comprising an imaging apparatus adapted to capture images from a surrounding of the motor vehicle, wherein the imaging apparatus has at least one optical axis, and a data processing device performing visual odometry on a plurality of images captured by the imaging apparatus yielding odometric data comprising the ego vehicle translation vector T for each image.

In navigation, odometry is a technique to determine the ego-motion of a moving platform, e.g., a motor vehicles, using cameras. There is a large number of odometric approaches. The known calibration of the camera or cameras, i.e., the alignment of the optical axis with the motor vehicle is crucial for reliable odometry. The motion of a vehicle is typically described by six degrees of freedom: three rotations and a 3D translation vector T.

The alignment, i.e., the rotation of the camera/optical axis relative to the world coordinate system, is expressed in terms of three angles: yaw as the rotation around a vertical axis, pitch as the rotation around a lateral axis, and roll as the rotation around a forward axis. The world coordinate system may be defined by the adjustment of the imaging apparatus in the motor vehicle.

Due to small movements, load changes, thermal effects and more, the aforementioned angles can change slightly over time and an automated dynamic calibration is necessary. Otherwise the estimated relative position of observed objects, e.g., cars and pedestrians, or markings will not be accurate. An erroneous calibration leads to a drift, i.e., a deviation between the visual odometry and the actual motion of the vehicle.

US Patent US 9,148,650 B2 discloses a method for multi-threaded visual odometry, using 2D-3D correspondences for continuous pose estimation, and combining this pose estimation with 2D-2D epipolar search to replenish 3D points accurately. The method uses a sequence of images captured by a single camera and tracks a defined number of points in the sequence of images. The scale drift is corrected using a mechanism that detects local planarity of the road by combining information from triangulated 3D points and image planar homography.

This requires the storage and analysis of a large amount of data in an additional thread of the data processing device. Additionally, the planar ground need to be detected, which is an additional computational effort and introduces further parameters that need to be set.

EP 2 181 417 A2 discloses a system for online calibration of a video system using odometric data in the form of a vanishing point.

US 9,213,938 B2 discloses a method of estimating the relative pose (rotation and translation) of an object between two images, using two views captured by a calibrated monocular camera, and a collection of pose hypotheses or estimates is generated by utilizing the redundant feature point information from both images.

US 2015/0312564 A1 discloses a method of misalignment correction and diagnostic function for a lane sensing sensor.

The problem underlying the invention is to provide an effective, simple and reliable calibration of the imaging apparatus with respect to pitch angle and/or yaw angle deviations.

The invention solves this problem with the features of the independent claims.

The invention has realized that the motor vehicle will on average move straight forward and parallel to the ground. Based on this assumption, the vision system according to the invention uses a technique based on statistical analysis to determine the misalignment and uses the results for a reliable calibration of the imaging apparatus.

The invention suggests that the data processing device performs a statistical analysis on the odometric data yielding at least one statistical value, and the data processing device calculates a pitch and/or yaw misalignment of the at least one optical axis by calculating a deviation of said statistical value from a predefined value corresponding to exact and constant forward movement of the ego vehicle.

The misalignment and/or an erroneous calibration of the imaging apparatus could be detected and/or compensated by the statistical analysis. It is assumed that on average the motor vehicle moves straight forward. As the vehicle moves an optical flow is preferably introduced in the images captured by the imaging apparatus. The average straight motion implies that the corresponding average direction of the optical flow is also straight. An odometric result by the odometry other than an average forward motion indicates a misalignment and/or an erroneous calibration that can be identified by the statistical analysis.

The odometric data preferably comprises a plurality of data points, i.e., data sets corresponding to a plurality of images. The odometric data can be stored and/or may be considered as a sequence.

If the imaging apparatus is arranged so that the optical axis points in the exact forward direction, i.e. horizontally along the vehicle axis, the pitch angle and the yaw angle should each equal 0 if the vehicle moves straight forward, rendering the predefined values for yaw angle and pitch angle equal to zero. Any deviation of the statistical value from the predefined values, in this example 0, indicates the misalignment.

According to the invention, the data processing device performs a parametrization of the vehicle translation vector T representing it with two spherical coordinates θ and φ, where θ denotes the yaw angle and φ denotes the pitch angle of the vehicle. The yaw angle θ and/or the pitch angle φ of the vehicle can change in short intervals. However, on average, the yaw angle θ and/or the pitch angle φ is constant, in this particular example zero, and any systematic deviation in the odometric data that is identified by the statistical analysis indicates a misalignment and/or an erroneous calibration. In one embodiment, the translation vector T is derived from and/or related to a frame to frame movement.

Representing the translation vector T with the two spherical angles θ and φ is advantageous as it requires the storage and/or processing of the data corresponding to the two spherical angles θ and φ only. However, it is also possible to perform the statistical analysis on the three components tx, ty, tz of the translation vector T in Cartesian coordinates, and to perform the transformation into polar coordinates only afterwards.

More preferably, the data processing device performs said parametrization by representing the vehicle translation vector T=(tx,ty,tz) as T=(cos θ cos φ, sin θ cos φ, -sin φ) in order to directly relate the yaw angle 0 and/or the pitch angle φ to the coordinates of the translation vector T.

According to the invention, the at least one statistical value comprises the mode value, the mean value, and/or the median value of a statistically distributed quantity, namely of pitch angle and/or yaw angle. The mode, mean, and/or median are statistical identifiers of a peak position of a unimodal distribution and/or histogram of the statistically distributed quantity. A systematic deviation in the odometric data is potentially easily identified by the statistical analysis of the mode, mean, and/or median.

Preferably, the statistical value further comprises a standard deviation, or a value relating to the standard deviation, of a statistically distributed quantity to describe the width of the distribution of the statistically distributed quantity.

Advantageously, only image data taken at a time when a turn-rate of the motor vehicle is below a threshold is considered for said visual odometry and statistical analysis, preferably when the turn-rate of the motor vehicle is zero, more preferably, when the vehicle moves straight. Preferably, only image data taken at a time when the speed of the motor vehicle is exceeds a threshold is considered for said visual odometry and statistical analysis. When the turn-rate is below a threshold and/or zero, and/or the speed exceeds a threshold, the influence of the odometric data by centrifugal forces and/or irregularities on the road is potentially minimized which leads to a minimized bias of the odometric data and a more reliable estimation of the misalignment.

When the turn rate of the motor vehicle is below a threshold, yaw, roll, and/or pitch change typically with a small rate or are constant. This allows a particularly reliable data acquisition without systematic changes in any of the angles induced by the ego-motion of the vehicle. In particular when the vehicle moves straight, the systematic changes of roll and/or yaw induced by the ego-motion of the vehicle is zero. When the vehicle does not accelerate, the pitch angle rate is zero.

When the speed exceeds a threshold, the vehicle typically goes nearly straight forward and small-scale disturbances on the road are damped out leading to a reliable data acquisition of odometric data.

In another preferred embodiment, only image data taken at a time when accelerations along one or more of the six degrees of freedom (the three angles and/or the 3D translational vector) are below a threshold, more preferably if the acceleration is zero to remove any potential bias of the odometric data. Accelerations along one or more the six degrees of freedom below a threshold and/or zero acceleration lead to only negligible and/or no changes in any of the angles yaw, pitch, and/or roll and a particular advantageous data acquisition is possible.

According to the invention, the statistical analysis involves the construction of a histogram and/or an estimation of a probability distribution, wherein the probability distribution preferably has the form of a function, like a polynomial, an exponential, and/or a composition thereof, or of a list or table. The odometric data can be sed to construct the histogram and/or estimate the probability distribution of a measured and/or estimated quantity. The histogram and/or probability distribution gives a detailed statistical description of the odometric data and allows an identification of confidential and potentially erroneous data.

Preferably, the bin width of the histogram is in the range between 0.001° and 0.1° in order to construct a histogram with a suitable resolution to perform statistical analysis.

In a preferred embodiment, the statistical value further comprises a width of a peak of the histogram and/or the probability distribution. The width of the peak could be computed by the standard deviation, full width at half maximum (FWHM), and/or by other statistical measures and allows a refined identification of confidential and potentially erroneous data.

Preferably, the statistical analysis uses a subset of odometric data. The odometric data comprises typically erroneous data that need to be neglected. Thus, a subset is preferably used to not take potential erroneous data into account.

Advantageously, the subset is given by an interquantile range of the odometric data, iqr = p - q, wherein p and q being p-quantile and q-quantile, respectively, where p>q. One embodiment of the subset is given by the interpercentile range of the odometric data, whereby p is the p-th percentile and q is the q-th percentile. A preferred subset is given by the interquartile range of the odometric data, whereby p=Q₃ and q=Q₁ and iqr=Q₃-Q₁ is the interquartile range. This ensures that only half the data centered at the peak is used and the tails of the histogram and/or probability distribution are neglected. It is likely that confidential data is close to the peak while potentially erroneous data lies in the tails.

Preferably, the at least one statistical value is updated continuously. As the calibration of the imaging apparatus changes with time, a continuous update of the odometric data that is used to perform the statistical analysis is preferred. The continuously updated at least one statistical value takes changes with time into account.

In the following the invention shall be illustrated on the basis of preferred embodiments with reference to the accompanying drawings, wherein:

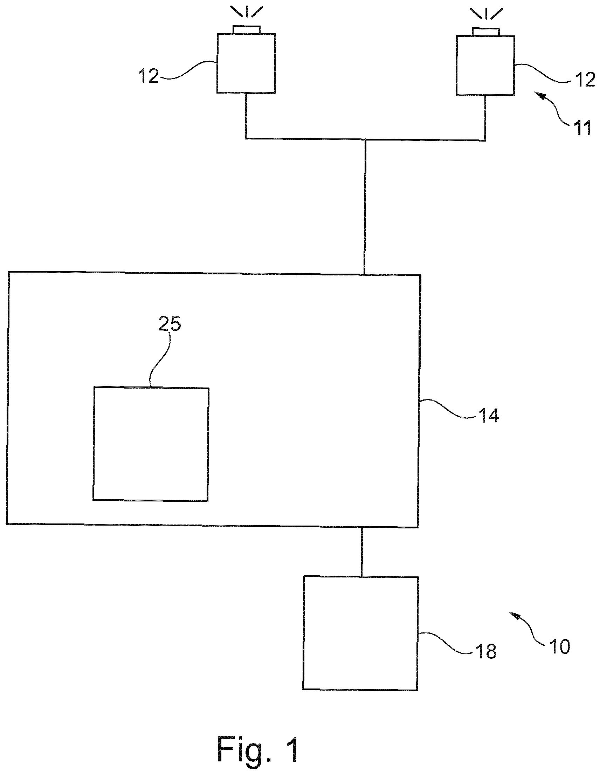

- Fig. 1: shows a schematic diagram of a vision system under the present invention;
- Fig. 2: shows a schematic view of a motor vehicle with an imaging apparatus;
- Fig. 3: shows a schematic flow diagram for illustrating the present invention;
- Fig. 4: shows a schematic histogram;
- Fig. 5: shows a schematic probability distribution;
- Fig. 6: shows a flow diagram of an embodiment applied in a motor vehicle; and
- Figs. 7 and 8: show examples of histograms.

The vision system 10 is mounted in a motor vehicle and comprises an imaging apparatus 11 for capturing images of a region surrounding the motor vehicle, for example a region in front of the motor vehicle, typically corresponding to the principal locomotion direction 200 of the motor vehicle 2.

Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments only one imaging device 12 forming a mono imaging apparatus 11 can be used.

The imaging apparatus 11 is coupled to a data processing device 14 adapted to process the image data received from the imaging apparatus 11. The data processing device 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25. The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle 2 is an autonomous vehicle adapted to drive partly or fully autonomously or automatically, and driving actions of the driver are partially and/or completely replaced or executed by the ego vehicle 2.

The data processing device 14 is adapted to perform visual odometry 100 leading to odometric data 101. There is a large variety of algorithms for odometry 100 and all of them could be applied. The accuracy of the estimated motion influences the accuracy of the dynamic calibration and thus of the estimated misalignment 202.

The data memory 25 is adapted to store a sequence of images 5 and/or data about the motor vehicle 2. In particular, the memory 25 is adapted to store a sequence 102 of odometric data 101, and the sequence 102 comprises odometric data 101 of at least one image 5.

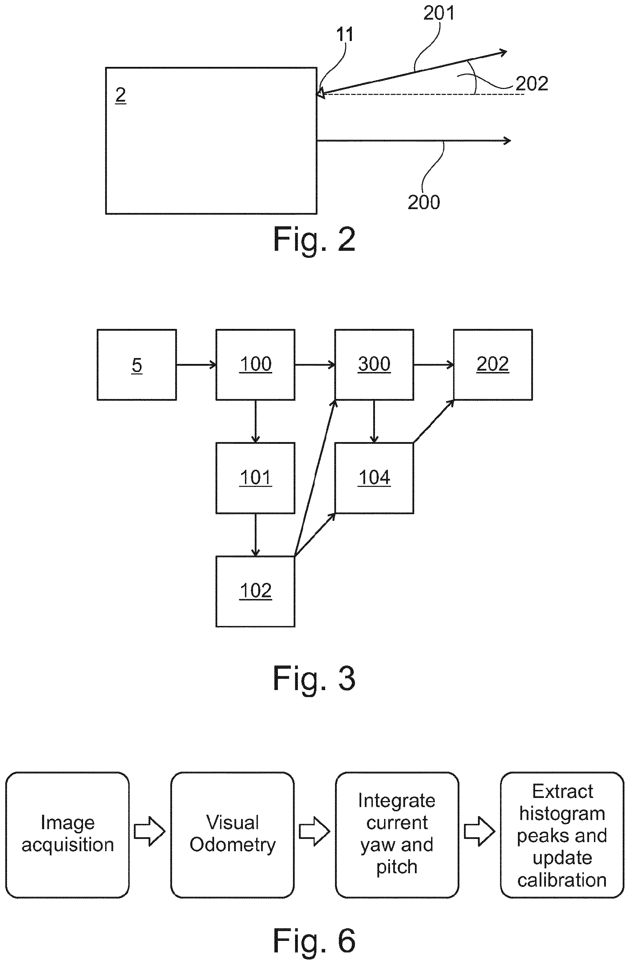

In Figure 2 the motor vehicle 2 is shown. The motor vehicle 2 moves along its principal locomotion direction, i.e., its exact forward direction 200. The imaging apparatus 11 is mounted in/on the motor vehicle 2 and is directed along an optical axis 201. The optical axis defines the actual calibration of the imaging apparatus 11. The motor vehicle 2, e.g., its exact forward direction 200, defines a static calibration 310 of the imaging apparatus 11.

In general, the forward direction 200 and optical axis 201 are not aligned in parallel. That is, the forward direction 200 and the optical axis 201 are related by a rotation around at least one of the three axes spanning a Cartesian coordinate system. Thus, the forward direction 200 and the optical axis 201 are in misalignment 202 which is defined by at least one angle. In other words, the misalignment 202 characterizes the difference between the actual calibration and the static calibration 310.

In the following, the direction of the translation, which is always computable, can be expressed as a normalized vector T= (tₓ, t_{y}, t_{z})^{t} of unit length, ∥T∥ =1. In order to relate the translation vector to the camera position, i.e., the optical axis 201 of the imaging apparatus 11, the direction can for example be encoded in terms of two spherical angles: T=(cosθ cosφ, sinθ cosφ, -sinφ)^{t}. In this parametrization, straight movement results in a direct correspondence, namely, yaw angle θ and pitch angle φ.

If the motor vehicle 2 is moving on a perfectly flat surface without turning, the common visual odometry 100 will compute a translational movement caused by the misalignment 202 of the optical axis 201 of the camera and the world coordinate system, which is preferably defined by the forward direction 200 of the motor vehicle 2.

Under the assumption that the average motion of the motor vehicle 2 is straight forward the measured yaw and/or pitch angles will cluster at angles corresponding to the current misalignment 202, i.e., the dynamic calibration angles. This misalignment 202 can be identified and taken into account by further data processing, navigation and/or driver assistance.

The data processing device 14 is adapted to perform an estimation of the misalignment 202 between the forward direction 200 and the optical axis 201.

Figure 3 shows a schematic flow diagram of a preferred embodiment of the present invention. Each time an image 5 is captured, the image 5 is processed by the data processing device 14 and visual odometry 100 is performed. This yields odometric data 101 from which a sequence 102 is formed. The visual odometry 100 is used to generate a histogram 300. The histogram 300 could be updated each time when a new image 5 is analyzed, and/or after a sequence 102 of odometric data 101 has been analyzed. Based on the histogram 300 and/or the sequence 102 of the odometric data 101, the statistical analysis 104 is preferably performed to estimate the misalignment 202. The misalignment 202 could also be inferred from the histogram 300 directly.

For an improved convergence of the misalignment 202, only measurements/odometric data 101 where the estimated motion of the motor vehicle 2 comes close to the straight movement assumption is preferably used. This can be done by adding only odometric data 101, e.g., angles, to the sequence 102 when the vehicle's 2 turn-rate is below a threshold and/or the speed exceeds another threshold.

A preferred method to capture the misalignment 202 is to integrate the measurements by means of the histogram 300 and/or a probability distribution 308.

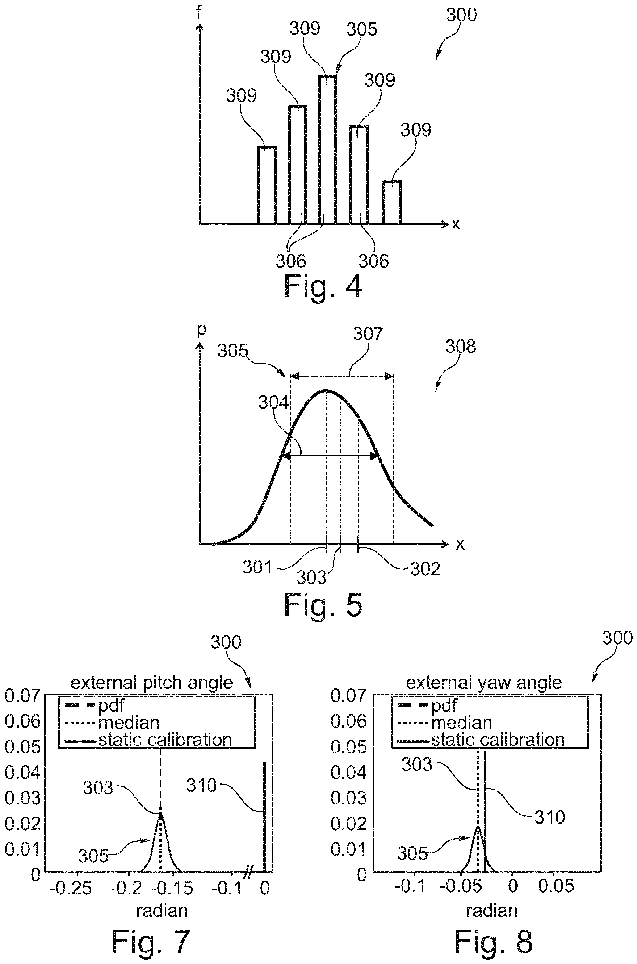

Figure 4 shows a histogram 300 in a schematic representation. The histogram 300 records the frequency, f, or the number of measurements. Each measurement, e.g., the estimated pitch angle and/or yaw angle, represents a value (called x) and falls in a corresponding bin 309. In general, the number of bins 309 is chosen according to the amount of data, the amount of memory 25, and/or the application. Typically, the number of bins 309 is preferably greater than 100, more preferably greater than 250.

The histogram 300 has a peak 305 that is defined as the bin 309 with the largest frequency, i.e., the measurement with the largest number of occurrence. Around the peak 309 are reasonable values for measurements. Due to measurement errors, the histogram 300 can get wide/heavy tailed, i.e., there are measurements that are unlikely to be representative for a realistic and actual observable. Thus, for the statistical analysis 104, only measurements of a subset 306, e.g., a subset 306 of bins 309, is taken into account.

The histogram 300 needs to be quantized and this might differ depending on the system, e.g., on the data processing device 14, the memory 25, and/or the application. For a motor vehicle 2 a quantization level of 1/100° should be sufficient, i.e., the width of a bin 309 equal 1/100°.

For convenience, the histogram 300 may be normalized by the number of samples, i.e., the number of data in the sequence 102 of odometric data 101, to results in a sample probability density function (pdf) as an estimate for the probability distribution 308 as shown schematically in Figure 5.

Figure 5 shows a schematic probability distribution 308, p, as a function of the measurement, x. The histogram 300 serves an estimate of the true probability distribution 308. It has a peak 305 and a well-defined mode 301, mean 302, and median 303 .

The mode 301 is defined as the position of the peak 305, i.e., the position of the maximum of a unimodal probability distribution 308. The mean 302 is the average value of the probability distribution 308. The median 303 is the value x separating the higher half of the probability distribution 308 of the lower half of the probability distribution 308.

The peak 305 has a width 304. The width 304 could be defined by the standard deviation of probability distribution 308.

It is not reasonable that the calibration angles differ dramatically from the static calibration 310 angles, i.e., it is not reasonable that the misalignment 202 is large. Hence all measurements exceeding a certain difference, for example 3°, can be excluded from the statistical analysis 104. This defines a preferred subset 306 for the statistical analysis 104. The odometric data 101 is the subset 306 is adapted to meet a defined confidence level. A preferred confidence estimation is to examine the width 304 of the peak 305 and if the width 304 is below a threshold the estimate is considered confident. A robust method to determine the width 304 is given by an interquartile range 307.

The probability distribution 308 can be characterized by quantiles, preferably by quartiles. In particular the first quartile Q₁ that splits off the lowest 25% of the probability distribution 308 from the highest 75% of the probability distribution 308 and the third quartile Q₃ that splits off the lowest 75% of the probability distribution 308 from the highest 25% of the probability distribution 308. The difference of the third quartile Q₃ and the first quartile Q₁ define the interquartile range as iqr=Q₃-Q₁. Also other quantiles could be of interest for the statistical analysis 104. A preferred subset 306 is given by the interquartile range.

As the accumulated histogram 300 and/or the estimated probability distribution 308 will depend on the actual driving pattern, a confidence in the estimated peak 305 position is required. This can preferably achieved when the calibration parameters, i.e., the estimated misalignment 202, is only updated if the confidence of the odometric data 101 is high.

Mode 301, mean 302, median 303, width 304 and/or interquantile range 307 can be defined, estimated, and/or computed of the histogram 300 analogous to respective quantities of the probability distribution 308.

Figure 6 shows a flow diagram of an embodiment of the invention applied in/on a motor vehicle 2. First, the images 5 are taken by a camera. Second, visual odometry 100 is performed by the data processing device 14. Then, the set of odometric data 101 is constructed by the integration of current yaw angle and pitch angle data. Integration means, that as the image 5 is taken, the set of odometric data 101 is enlarged by the odometric date about yaw angle and pitch angle provided by the analysis of the captured image 5. Then, the statistical analysis 104 is performed. In this embodiment, the position of the peak 305 of the histogram 300 is extracted which is a direct measure of the misalignment 202. By this, the calibration of the imaging apparatus 11 is updated.

The present vision method relies on the statistical analysis 104 of the odometric data 101 and as such requires sufficient samples to be useful and reliable. Therefore, no calibration parameters are extracted before a specified number of measurements have been collected. That is, the sequence 102 preferably exceeds a defined length and/or the odometric data 101 reach a defined data size before the misalignment 202 is estimated. A good number of measurements depends on how the requirements of fast updated and accuracy are weighted; around 1000 measurements will preferably be sufficient for an initial estimate of the misalignment 202.

In an online setting, the histogram 300 and/or the probability distribution 309 is preferably updated continuously. A preferred method keeps track of the last N samples in the odometric data 101 and whenever a new measurement of an odometric date is added to the odometric data 101, the oldest measurement is removed.

A preferred alternative updates the histogram 300 and/or the probability distribution 309 by a weighted average of the histogram 300 and/or the probability distribution 309, wherein a single measurement, i.e., an odometric date, is interpreted as the histogram 300 and/or the probability distribution 309 with only one non-zero entry. If the measurement falls into bin j, the histogram 300 may be updated as: p(j)=α p(j), and ∀ i≠j p(i) = p(i) · (1-αp(j))/(1-p(j)), which can preferably be implemented using fixed-point arithmetic.

Figures 7 and 8 show examples of histograms 300 of pitch angle and yaw angle, respectively, each of which are statistically distributed quantities. Both histograms 300 are unimodal and show a well-defined peak 305. The desired pitch angle φ and yaw angle θ can preferably obtained from the mode 301 (peak position), mean 302, and/or median 303 (50%percentile) in the histogram 300 and/or the probability distribution 308.

The bins 309 are chosen so that a reliable estimation of the median 303 can be performed. Here, the pitch and yaw angles cover an interval of about 0.05 radian, i.e., about 2,9°. Preferably, the bin 309 width is about 1/100°. Thus, the number of bins 309 in these examples is 290.

Remarkably, neither the median 303 nor the peak 305 is centered close to 0° which here describes the predefined value corresponding to a perfect alignment and/or zero misalignment 202 of the optical axis 201 with the forward direction 200. Generally, perfect alignment can correspond to a pitch angle different from 0°. However, a pitch angle of a value unequal 0° could also indicate a straight movement as the vehicle changes its pitch under different conditions, e.g., the number of passengers, the weight of the luggage in the vehicle. The misalignment 202 is expressed as the difference between the median 303 and a static calibration 310 which is defined as the position in which the imaging apparatus 11 is fixed. When the misalignment 202 is known, the imaging apparatus 11, the image processing and/or the visual odometry 100 can be calibrated accordingly.

## Claims

1. A vision system (10) for autonomous driving and/or driver assistance for a motor vehicle (2), comprising
- an imaging apparatus (11) adapted to capture images (5) from a surrounding (6) of the motor vehicle (2), wherein
- the imaging apparatus (11) has at least one optical axis (201), and
- a data processing device (14) performing visual odometry (100) on a plurality of images (5) captured by the imaging apparatus (11) yielding odometric data (101) comprising the ego vehicle translation vector T (101) for each image (5),
wherein
- the data processing device (14) performs a statistical analysis (104) on the odometric data (101) yielding at least one statistical value, and
- the data processing device (14) calculates a pitch and/or yaw misalignment (202) of the at least one optical axis (201) by calculating a deviation of said statistical value from a predefined value corresponding to exact and constant forward movement of the ego vehicle (2), wherein the data processing device (14) performs a parametrization of the vehicle translation vector T representing it with two spherical coordinates θ and φ, where θ denotes the yaw angle and φ denotes the pitch angle of the vehicle (2), and the statistical analysis (104) involves a construction of a histogram (300) and/or an estimation of a probability distribution (308) of the statistically distributed quantity, namely of the pitch angle φ and/or the yaw angle θ, wherein the at least one statistical value comprises the mode value (301), the mean value (302) and/or the median value (303) of the statistically distributed quantity in the histogram (300) and/or the probability distribution (308), wherein the misalignment (202) is the difference between the mode value (301), the mean value (302) and/or the median value (303) and a static calibration angle (310) of said imaging apparatus (11).

2. The vision system according to claim 1, **characterized in that** the data processing device (14) performs said parametrization by representing the vehicle translation vector T=(tx,ty,tz) as T=(cos θ cos φ, sin θ cos φ, -sin φ).

3. The vision system according to any one of the preceding claims, **characterized in that** the statistical value further comprises a standard deviation, or a value relating to the standard deviation, of a statistically distributed quantity.

4. The vision system according to any one of the preceding claims, **characterized in that** only image data taken at a time when a turn-rate of the motor vehicle (2) is below a threshold is considered for said visual odometry and statistical analysis.

5. The vision system according to any one of the preceding claims, **characterized in that** only image data taken at a time when the speed of the motor vehicle (2) is exceeds a threshold is considered for said visual odometry and statistical analysis (104).

6. The vision system according to any one of the preceding claims, **characterized in that** the probability distribution (308) has the form of a function or a list or table.

7. The vision system according to any one of the preceding claims, **characterized in that** the bin width of the histogram (300) is in the range between 0.001° and 0.1°.

8. The vision system according to any one of the preceding claims, **characterized in that** the statistical analysis (104) uses a subset (306) of said odometric data (101).

9. The vision system according to claim 8, **characterized in that** the subset (306) is given by an interquantile range (307) of the odometric data (101), iqr = p - q, wherein p and q being p-quantile and q-quantile, respectively, where p>q.

10. The vision system according to any one of the preceding claims, **characterized in that** the at least one statistical value is updated continuously.

11. A vision method for autonomous driving and/or driver assistance for a motor vehicle (2), comprising
- capturing images (5) from a surrounding (6) of the motor vehicle (2) with an imaging apparatus (11), wherein
- the imaging apparatus (11) has at least one optical axis (201), and
- performing visual odometry (100) with a data processing device (14) on a plurality of images (5) captured by the imaging apparatus (11) yielding odometric data (101) comprising the ego vehicle translation vector T (101) for each image (5),
- performing with the data processing device (14) a statistical analysis (104) on the odometric data (101) yielding at least one statistical value, and
- calculating with the data processing device (14) a pitch and/or yaw misalignment (202) of the at least one optical axis (201) by calculating a deviation of said statistical value from a predefined value corresponding to exact and constant forward movement of the ego vehicle (2), wherein a parametrization of the vehicle translation vector T is performed representing it with two spherical coordinates θ and φ, where θ denotes the yaw angle and φ denotes the pitch angle of the vehicle (2), and the statistical analysis (104) involves constructing a histogram (300) and/or estimating a probability distribution (308) of a statistically distributed quantity, namely the pitch angle φ and/or yaw angle θ, wherein the at least one statistical value comprises the mode value (301), the mean value (302) and/or the median value (303) of the statistically distributed quantity in the histogram (300) and/or the probability distribution (308), wherein the misalignment (202) is the difference between the mode value (301), the mean value (302) and/or the median value (303) and a static calibration angle (310) of said imaging apparatus (11).

## Patentansprüche

1. Ein Sichtsystem (10) für autonomes Fahren und/oder Fahrerassistenz für ein Kraftfahrzeug (2), umfassend
- eine Bildaufnahmevorrichtung (11), die eingerichtet ist, Bilder (5) aus einer Umgebung (6) des Kraftfahrzeugs (2) aufzunehmen, wobei
- die Bildaufnahmevorrichtung (11) mindestens eine optische Achse (201) aufweist, und
- eine Datenverarbeitungsvorrichtung (14), die eine visuelle Odometrie (100) an einer Vielzahl von Bildern (5) durchführt, die von der Bildaufnahmevorrichtung (11) aufgenommen wurden, was odometrische Daten (101) ergibt, die den Ego-Fahrzeug-Translationsvektor T (101) für jedes Bild (5) umfassen,
wobei
- die Datenverarbeitungsvorrichtung (14) eine statistische Analyse (104) an den odometrischen Daten (101) durchführt, die mindestens einen statistischen Wert ergibt, und
- die Datenverarbeitungseinrichtung (14) eine Nick- und/oder Gier-Fehlausrichtung (202) der mindestens einen optischen Achse (201) berechnet, indem sie eine Abweichung des genannten statistischen Wertes von einem vordefinierten Wert berechnet, der einer exakten und konstanten Vorwärtsbewegung des Ego-Fahrzeugs (2) entspricht,
wobei die Datenverarbeitungseinrichtung (14) eine Parametrisierung des Fahrzeugtranslationsvektors T durchführt, die diesen mit zwei Kugelkoordinaten θ und φ angibt, wobei θ den Gierwinkel und φ den Nickwinkel des Fahrzeugs (2) bezeichnet, und die statistische Analyse (104) eine Konstruktion eines Histogramms (300) und/oder eine Schätzung einer Wahrscheinlichkeitsverteilung (308) der statistisch verteilten Größe, nämlich des Nickwinkels φ und/oder des Gierwinkels θ, beinhaltet, wobei der mindestens eine statistische Wert den Modalwert (301), den Mittelwert (302) und/oder den Medianwert (303) der statistisch verteilten Größe in dem Histogramm (300) und/oder der Wahrscheinlichkeitsverteilung (308) umfasst, wobei die Fehlausrichtung (202) die Differenz zwischen dem Modalwert (301), dem Mittelwert (302) und/oder dem Medianwert (303) und einem statischen Kalibrierungswinkel (310) der Bildaufnahmevorrichtung (11) ist.

2. Das Sichtsystem nach Anspruch 1, **dadurch gekennzeichnet, dass** die Datenverarbeitungsvorrichtung (14) die Parametrisierung durchführt, indem sie den Fahrzeugverschiebungsvektor T=(tx,ty,tz) als T=(cos θ cos φ, sin θ cos φ, -sin φ) angibt.

3. Das Sichtsystem nach einem der vorhergehenden Ansprüche, **dadurch gekennzeichnet, dass** der statistische Wert weiterhin eine Standardabweichung oder einen auf die Standardabweichung bezogenen Wert einer statistisch verteilten Größe umfasst.

4. Das Sichtsystem nach einem der vorhergehenden Ansprüche, **dadurch gekennzeichnet, dass** nur Bilddaten, die zu einem Zeitpunkt aufgenommen wurden, zu dem eine Drehrate des Kraftfahrzeugs (2) unter einem Schwellenwert liegt, für die visuelle Odometrie und die statistische Analyse berücksichtigt werden.

5. Das Sichtsystem nach einem der vorhergehenden Ansprüche, **dadurch gekennzeichnet, dass** für die visuelle Odometrie und statistische Analyse (104) nur Bilddaten berücksichtigt werden, die zu einem Zeitpunkt aufgenommen werden, zu dem die Geschwindigkeit des Kraftfahrzeugs (2) einen Schwellenwert überschreitet.

6. Das Sichtsystem nach einem der vorhergehenden Ansprüche, **dadurch gekennzeichnet, dass** die Wahrscheinlichkeitsverteilung (308) die Form einer Funktion oder einer Liste oder Tabelle hat.

7. Das Sichtsystem nach einem der vorhergehenden Ansprüche, **dadurch gekennzeichnet, daß** die Bin-Breite des Histogramms (300) im Bereich zwischen 0,001° und 0,1° liegt.

8. Das Sichtsystem nach einem der vorangehenden Ansprüche, **dadurch gekennzeichnet, daß** die statistische Analyse (104) eine Teilmenge (306) der odometrischen Daten (101) verwendet.

9. Das Sichtsystem nach Anspruch 8, **dadurch gekennzeichnet, daß** die Teilmenge (306) durch einen Interquantilbereich (307) der odometrischen Daten (101) gegeben ist, iqr = p - q, wobei p und q jeweils p-Quantil und q-Quantil sind, wobei p>q.

10. Das Sichtsystem nach einem der vorhergehenden Ansprüche, **dadurch gekennzeichnet, dass** der mindestens eine statistische Wert kontinuierlich aktualisiert wird.

11. Ein Sichtverfahren für autonomes Fahren und/oder Fahrerassistenz für ein Kraftfahrzeug (2), umfassend
- Aufnehmen von Bildern (5) aus einer Umgebung (6) des Kraftfahrzeugs (2) mit einer Bildaufnahmevorrichtung (11), wobei
- die Bildaufnahmevorrichtung (11) mindestens eine optische Achse (201) aufweist, und
- Durchführen einer visuellen Odometrie (100) mit einer Datenverarbeitungsvorrichtung (14) an einer Vielzahl von Bildern (5), die von der Bildaufnahmevorrichtung (11) aufgenommen wurden, wodurch odometrische Daten (101) erzeugt werden, die den Translationsvektor T (101) des Ego-Fahrzeugs für jedes Bild (5) umfassen,
- Durchführen einer statistischen Analyse (104) mit der Datenverarbeitungsvorrichtung (14) an den odometrischen Daten (101), die mindestens einen statistischen Wert ergibt, und
- Berechnen einer Nick- und/oder Gier-Fehlausrichtung (202) der mindestens einen optischen Achse (201) mit der Datenverarbeitungsvorrichtung (14) durch Berechnen einer Abweichung des statistischen Werts von einem vordefinierten Wert, der einer exakten und konstanten Vorwärtsbewegung des Ego-Fahrzeugs (2) entspricht, wobei eine Parametrisierung des Fahrzeugverschiebungsvektors T durchgeführt wird, die ihn mit zwei Kugelkoordinaten θ und φ angibt, wobei θ den Gierwinkel bezeichnet und φ den Nickwinkel des Fahrzeugs (2) bezeichnet, und die statistische Analyse (104) das Erstellen eines Histogramms (300) und/oder das Schätzen einer Wahrscheinlichkeitsverteilung (308) einer statistisch verteilten Größe, nämlich des Nickwinkels φ und/oder des Gierwinkels θ, umfasst, wobei der mindestens eine statistische Wert den Modalwert (301), den Mittelwert (302) und/oder den Medianwert (303) der statistisch verteilten Größe in dem Histogramm (300) und/oder der Wahrscheinlichkeitsverteilung (308) umfasst, wobei die Fehlausrichtung (202) die Differenz zwischen dem Modalwert (301), dem Mittelwert (302) und/oder dem Medianwert (303) und einem statischen Kalibrierungswinkel (310) der Bildaufnahmevorrichtung (11) ist.

## Revendications

1. Un système de vision (10) pour conduite autonome et/ou aide à la conduite pour un véhicule à moteur (2), comprenant
- un appareil d'imagerie (11) adapté pour capturer des images (5) d'un environnement (6) du véhicule à moteur (2), dans lequel
- l'appareil d'imagerie (11) présente au moins un axe optique (201), et
- un dispositif de traitement de données (14) exécutant une odométrie visuelle (100) sur une pluralité d'images (5) capturées par l'appareil d'imagerie (11), ce qui donne des données odométriques (101) comprenant le vecteur de translation T (101) de l' égo-véhicule pour chaque image (5),
dans lequel
- le dispositif de traitement de données (14) exécute une analyse statistique (104) sur les données odométriques (101), ce qui donne au moins une valeur statistique, et
- le dispositif de traitement de données (14) calcule un désalignement de tangage et/ou de lacet (202) de l'au moins un axe optique (201) en calculant un écart de ladite valeur statistique par rapport à une valeur prédéfinie correspondant à un déplacement avant exact et constant de l'égo-véhicule (2),
dans lequel
le dispositif de traitement de données (14) effectue une paramétrisation du vecteur de translation T du véhicule, le représentant avec deux coordonnées sphériques θ et Φ, où θ désigne l'angle de lacet et Φ désigne l'angle de tangage du véhicule (2), et l'analyse statistique (104) implique la construction d'un histogramme (300) et/ou l'estimation d'une distribution de probabilités (308) de la quantité soumise à une distribution statistique, c'est-à-dire de l'angle de tangage Φ et/ou de l'angle de lacet θ, l'au moins une valeur statistique comprenant la valeur modale (301), la valeur moyenne (302) et/ou la valeur médiane (303) de la quantité soumise à une distribution statistique dans l'histogramme (300) et/ou la distribution de probabilités (308), le désalignement (202) étant la différence entre la valeur modale (301), la valeur moyenne (302) et/ou la valeur médiane (303) et un angle d'étalonnage statique (310) dudit appareil d'imagerie (11).

2. Le système de vision selon la revendication 1, **caractérisé en ce que** le dispositif de traitement de données (14) exécute ladite paramétrisation en représentant le vecteur de translation T=(tx, ty, tz) du véhicule en tant que T=(cos θ cos Φ, sin θ cos Φ, -sin Φ).

3. Le système de vision selon l'une quelconque des revendications précédentes, **caractérisé en ce que** la valeur statistique comprend en outre un écart-type, ou une valeur relative à l'écart-type, d'une quantité soumise à une distribution statistique.

4. Le système de vision selon l'une quelconque des revendications précédentes, **caractérisé en ce que** seules des données d'image prises à un moment où une vitesse de virage du véhicule à moteur (2) est inférieure à un seuil sont prises en compte pour lesdites odométrie visuelle et analyse statistique.

5. Le système de vision selon l'une quelconque des revendications précédentes, **caractérisé en ce que** seules des données d'image prises à un moment où la vitesse du véhicule à moteur (2) dépasse un seuil sont prises en compte pour lesdites odométrie visuelle et analyse statistique (104).

6. Le système de vision selon l'une quelconque des revendications précédentes, **caractérisé en ce que** la distribution de probabilités (308) présente la forme d'une fonction ou d'une liste ou d'un tableau.

7. Le système de vision selon l'une quelconque des revendications précédentes, **caractérisé en ce que** la largeur de colonne de l'histogramme (300) est comprise entre 0,001° et 0,1°.

8. Le système de vision selon l'une quelconque des revendications précédentes, **caractérisé en ce que** l'analyse statistique (104) utilise un sous-ensemble (306) desdites données odométriques (101).

9. Le système de vision selon la revendication 8, **caractérisé en ce que** le sous-ensemble (306) est donné par un écart interquantile (307) des données odométriques (101), EI = p - q, où p et q sont respectivement le quantile p et le quantile q, où p>q.

10. Le système de vision selon l'une quelconque des revendications précédentes, **caractérisé en ce que** l'au moins une valeur statistique est mise à jour en continu.

11. Un procédé de vision pour conduite autonome et/ou aide à la conduite pour un véhicule à moteur (2), comprenant
- la capture d'images (5) d'un environnement (6) du véhicule à moteur (2) au moyen d'un appareil d'imagerie (11), dans lequel
- l'appareil d'imagerie (11) présente au moins un axe optique (201), et
- l'exécution d'une odométrie visuelle (100) au moyen d'un dispositif de traitement de données (14) sur une pluralité d'images (5) capturées par l'appareil d'imagerie (11), ce qui donne des données odométriques (101) comprenant le vecteur de translation T (101) de l'égo-véhicule pour chaque image (5),
- l'exécution, au moyen du dispositif de traitement de données (14), d'une analyse statistique (104) sur les données odométriques (101), ce qui donne au moins une valeur statistique, et
- le calcul, au moyen du dispositif de traitement de données (14), d'un désalignement de tangage et/ou de lacet (202) de l'au moins un axe optique (201) en calculant un écart de ladite valeur statistique par rapport à une valeur prédéfinie correspondant à un déplacement avant exact et constant de l' égo-véhicule (2), dans lequel
une paramétrisation du vecteur de translation T du véhicule est exécutée, le représentant avec deux coordonnées sphériques θ et Φ, où θ désigne l'angle de lacet et Φ désigne l'angle de tangage du véhicule (2), et l'analyse statistique (104) implique la construction d'un histogramme (300) et/ou l'estimation d'une distribution de probabilités (308) d'une quantité soumise à une distribution statistique, c'est-à-dire de l'angle de tangage Φ et/ou de l'angle de lacet θ, l'au moins une valeur statistique comprenant la valeur modale (301), la valeur moyenne (302) et/ou la valeur médiane (303) de la quantité soumise à une distribution statistique dans l'histogramme (300) et/ou la distribution de probabilités (308), le désalignement (202) étant la différence entre la valeur modale (301), la valeur moyenne (302) et/ou la valeur médiane (303) et un angle d'étalonnage statique (310) dudit appareil d'imagerie (11).
